(19) Europäisches Patentamt
European Patent Office
Office européen des brevets

(11) **EP 4 730 781 A1**

(12) **EUROPEAN PATENT APPLICATION**

(43) Date of publication:
**22.04.2026 Bulletin 2026/17**

(21) Application number: **24306723.8**

(22) Date of filing: **17.10.2024**

(51) International Patent Classification (IPC):
**H04N 19/117** (2014.01)   **H04N 19/70** (2014.01)
**H04N 19/174** (2014.01)   **H04N 19/176** (2014.01)
**H04N 19/82** (2014.01)

(52) Cooperative Patent Classification (CPC):
**H04N 19/117; H04N 19/174; H04N 19/176;**
**H04N 19/70; H04N 19/82**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **BOISSON, Guillaume**
  **35137 PLEUMELEUC (FR)**

• **BORDES, Philippe**
  **35890 LAILLE (FR)**
• **LEFEBVRE, Frederic**
  **35000 RENNES (FR)**
• **GALPIN, Franck**
  **35235 THORIGNE-FOUILLARD (FR)**
• **MARQUANT, Gwenaelle**
  **35630 LA CHAPELLE CHAUSSEE (FR)**

(74) Representative: **Interdigital**
**Immeuble ZEN 2**
**845 A, avenue des Champs Blancs**
**35510 Cesson-Sévigné (FR)**

(54) **REUSE OF LOOP FILTER CONTROL INFORMATION FROM REFERENCE FRAMES**

(57)   A method and an apparatus for loop filter control information derivation is provided that can be used in video encoding and decoding systems. A reconstructed version of a block of a video is obtained and loop filter control information for the block is derived from loop filter control information used in a reference frame of the video. One or more loop filters are applied to the reconstructed version of the block using the derived loop filter control information. The loop filter control information can be derived using motion data of the block or from collocated block in the reference frame.

1400

Obtain reconstructed block — 1410

Derive loop filter syntax from a reference frame — 1420

Apply loop filter — 1430

**FIG. 14**

EP 4 730 781 A1

## Description

### BACKGROUND

The present application is related to video compression. The present embodiments relate to a method and an apparatus for encoding or decoding an image or a video. More particularly, the present embodiments relate to improving loop filter signaling in video compression system.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

### BRIEF SUMMARY

Briefly stated, in one embodiment, a method for loop filter control information derivation is provided. The method can be used in video encoding and video decoding systems and methods. A reconstructed version of a block of a video is obtained and loop filter control information for the block is derived from loop filter control information used in a reference frame of the video. One or more loop filters are applied to the reconstructed version of the block using the derived loop filter control information. The loop filter control information can be derived using motion data of the block or from collocated block in the reference frame.

In another aspect, an apparatus comprising one or more processors configured to obtain a reconstructed version of a block of a video, derive loop filter control information for the block from loop filter control information used in a reference frame of the video, and apply one or more loop filters to the reconstructed version of the block using the derived loop filter control information.

In some embodiments, the apparatus is further configured for encoding or decoding the video.

In another aspect, a computer readable storage medium is provided, the medium having stored thereon a bitstream comprising coded data relative to a video and at least one of an indication indicating that loop filter control information of a reference frame is reused, an indication indicating whether loop filter control information is derived using motion data or from collocated CTU, an index of a reference frame signaled at picture or slice level, an index of a reference frame signaled at CTU level.

In another aspect, a non-transitory computer readable medium storing executable program instructions to cause a computer executing the program instructions to perform the method mentioned above according to any one of the embodiments described herein is provided.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure.

FIG. 2 is a block diagram illustrating an example video encoder according to one or more embodiments of the present disclosure;

FIG. 3 is a block diagram illustrating an example video decoder according to one or more embodiments of the present disclosure;

FIG. 4A illustrates an example of loop filters in VVC;

FIG. 4B illustrates an example of ALF and CCALF in VVC;

FIG. 5 illustrates an example of additional loop filters implemented in ECM;

FIG. 6 illustrates an example of determination of reconstructed sample category in case of Edge Offset (EO) mode;

FIG. 7 illustrates an example of band split in case of Band Offset (BO) mode, the pixel ranges from 0...255 (in 8-bits) is uniformly split into 32 bands;

FIG. 8 illustrates an example of a modified SAO process when the CCSAO is applied;

FIG. 9 illustrates an example of candidate positions used for the CCSAO classifier;

FIG.10 illustrates an example of four 1-D directional patterns for CCSAO EA sample classification: horizontal (EO class = 0), vertical (EO class=1), 135° diagonal and 45° diagonal;

FIG.11 shows lumaALF 7x7 diamond shape filter (left) and chroma ALF 5x5 diamond shape filter (right);

FIG. 12 shows example of Luma ALF signaled filter shape;

FIG. 13 shows example of relative location of CCALF filtered chroma sampled and its support in the luma plane for 4:2:0 chroma format with chroma location of type 0;

FIG. 14 illustrates an example of a method for encoding/decoding a video according to an embodiment;

FIG. 15 illustrates an example of a method for in loop filter syntax derivation from reference frames, according to an embodiment;

FIG. 16 illustrates an example of a method for in loop filter syntax derivation from reference frames using motion data, according to an embodiment;

FIG. 17 illustrates an example of a method for in loop filter syntax derivation from reference frames using collocated CTU, according to an embodiment;

FIG. 18 illustrates an example of a method for in loop filter syntax derivation with multiple candidate reference frames, according to an embodiment;

FIG. 19 shows two remote devices communicating over a communication network in accordance with an example of the present principles.

FIG. 20 shows the syntax of a signal in accordance with an example of the present principles.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

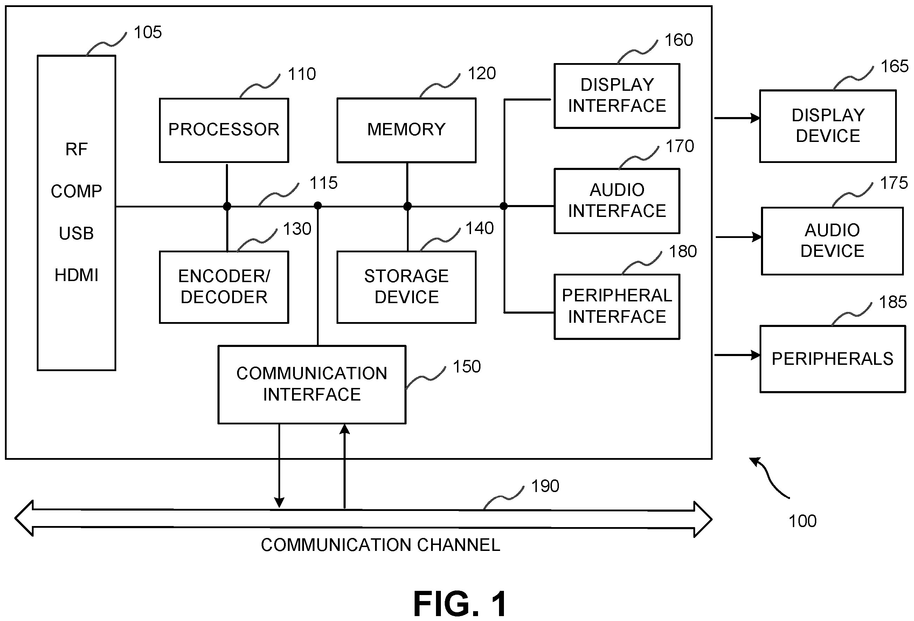

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

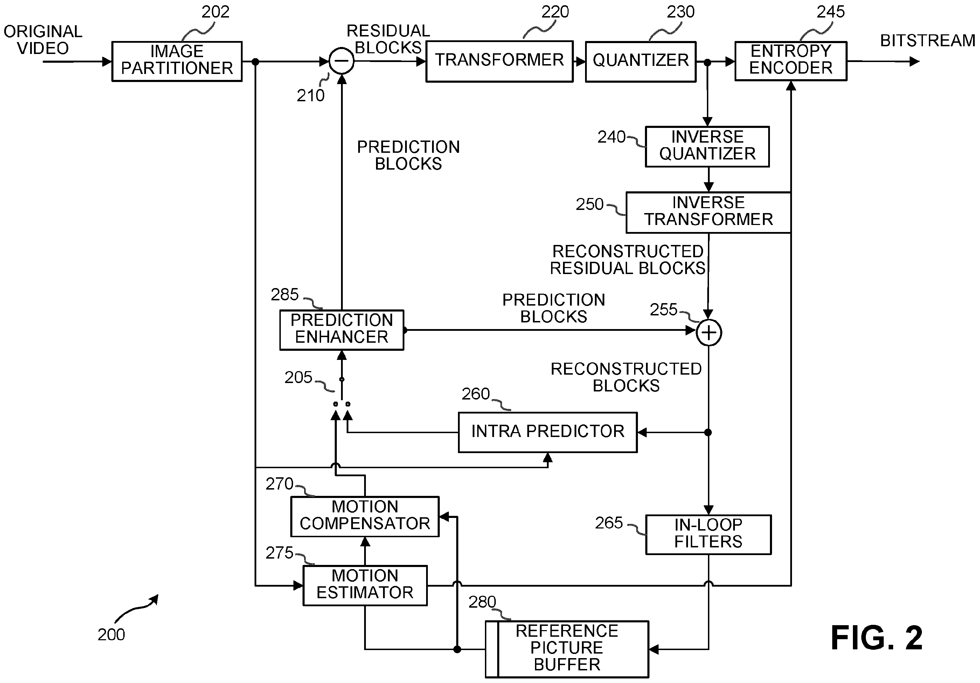

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

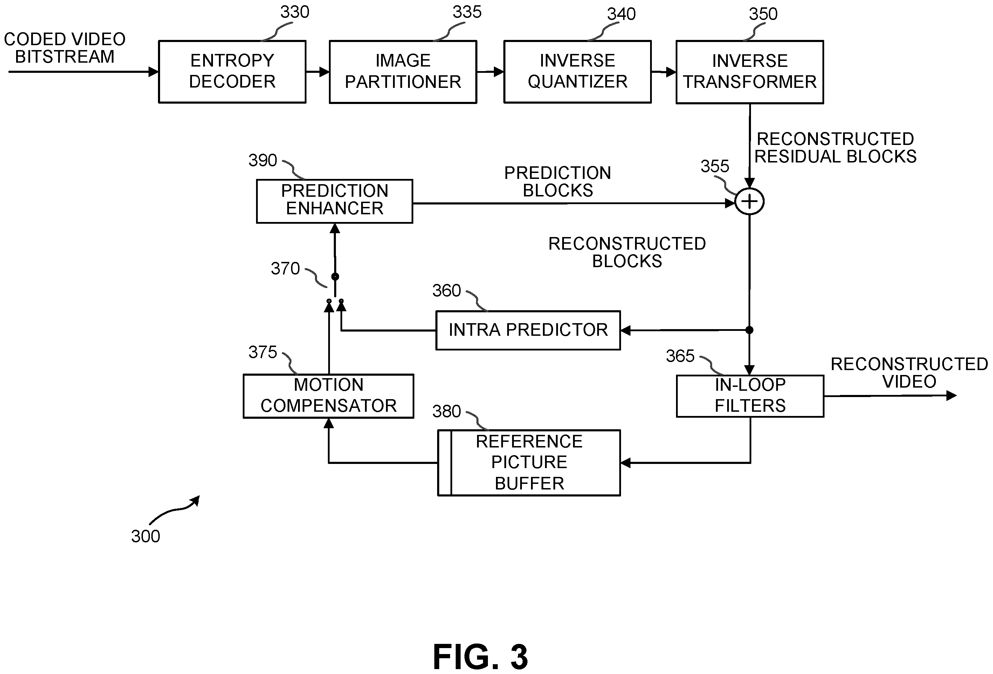

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 are applied to the reconstructed image (formed by the reconstructed blocks). In-loop filters (265) are applied to the reconstructed picture to perform, for example, deblocking/SAO (Sample Adaptive Offset)/ALF (Adaptive Loop Filter) filtering to reduce encoding artifacts. The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340, and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) are applied to the reconstructed image (formed by the reconstructed blocks), to output reconstructed (decoded) video. The filtered reconstructed image is also stored in a reference picture buffer 380 for reference by the motion compensator 375. The reference picture buffer 380 is also known as decoded pictures buffer, DPB. Note that, for a given picture, the contents of the reference picture buffer 380 on the decoder 300 side is identical to the contents of the reference picture buffer 280 on the encoder 200 side for the same picture.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Embodiments described herein relates more specifically to in-loop filtering.

Block-based intra/inter prediction and transform coding, together with residues quantization, induce a variety of artifacts at medium and low bitrates. In order to reduce those artifacts, video coding standards, such as VVC, and state-of-the-art video coding solutions, such as ECM, implement in-loop filters, such as deblocking filtering (DBF), Bilateral filtering (BIF), Sample-adaptive offset (SAO) and Adaptive loop filtering (ALF).

Deblocking filter (DBF) aims at smoothing discontinuities that may appear along block boundaries. Sample-adaptive offset (SAO) is designed to attenuate artifacts occurring around edges and correct the local average intensity changes (e.g. banding artifacts) with offsets signalled in the bitstream. Bilateral filter (BIF) aims at denoising further reconstructed pictures from artifacts induced from residuals quantization in the Transform domain. Adaptive loop filters (ALF) are determined at encoder side as optimal filters according to a rate-distortion criterion. ALF filters are transmitted along with the bitstream, then retrieved and used at decoder side.

In-loop filters in Versatile Video Coding (VVC)

The VVC standard implements three kinds of in-loop filters: deblocking filter (DBF), Sample-adaptive offset (SAO), and Adaptive loop filter (ALF) as described in M. Karczewicz et al., "VVC In-Loop filters", in IEEE Transactions on Circuits and Systems for Video Technology, Vol. 31, No 10, October 2021. The deblocking filter aims at reducing blocking discontinuities. Sample-adaptive offset mostly aims at reducing artifacts resulting from the quantization of transform coefficients. Adaptive loop filter and Cross-component adaptive loop filter are adaptive filters enabling to enhance the reconstructed signal, using for instance Wiener-filter encoding approaches.

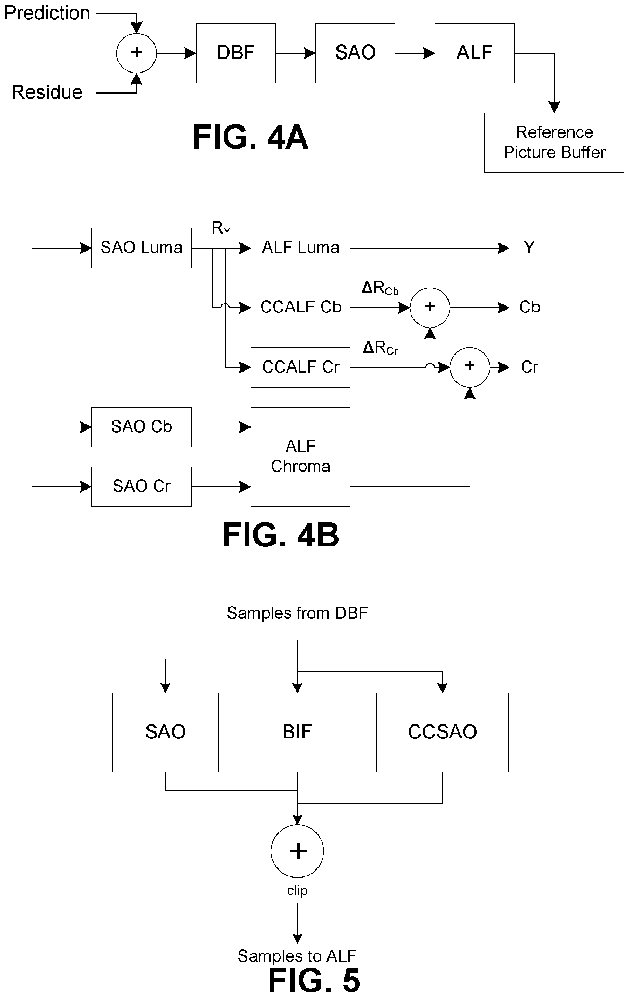

The workflow of VVC in-loop filters is depicted in FIG. 4A (see for example *Algorithm description for Versatile Video Coding and Test Model 11 (VTM 11) JVET- T2002, §3.7*). If local deblocking conditions are met, Luma and Chroma reconstructed samples located along block boundaries are first filtered with deblocking filters (DBF). Then offsets are added locally depending on a classification based on band-classifier or edge-classifier with Sample-adaptive offset (SAO). Eventually, Adaptive-loop filters (ALF) and its variant Cross-component Adaptive loop filters (CCALF) are run before storing the resulting sample values in the Reference Picture buffer.

The FIG. 4B shows more specifically the intricated workflows of ALF and CCALF in VVC. CCALF uses the Luma samples to refine Chroma sample values concurrently with ALF Luma and ALF Chroma.

In-loop filters in ECM

Further loop filters were introduced in Enhanced Compression Model (ECM) software:

- Bilateral filtering (BIF)
- Cross-component Sample adaptive offset (CCSAO)

Both are carried out in the same loop-filter stage as SAO, and, like SAO, use samples from deblocking as input, as shown in FIG. 5.

Bilateral filter (BIF): BIF offset is computed based on a 5x5 diamond, using coefficients to be fetched in precomputed look-up table, depending on QP and on the difference between the values of the neighbour sample and of the sample to be filtered. BIF is processed independently and in a similar way on Luma and on Chroma components.

Cross-component sample adaptive offset (CCSAO): CCSAO is used to refine reconstructed samples. Similarly to SAO, CCSAO classifies the reconstructed samples into different categories, derives one offset for each category and adds the offset to the reconstructed samples in that category. Whereas SAO uses a single component of current sample as input, CCSAO utilizes all three components to classify the current sample into different colour bands.

Joint clipping: SAO, BIF and CCSAO offsets are computed in parallel, added to the reconstructed samples and jointly clipped, before proceeding to ALF, as shown in FIG. 5.

Sample-adaptive offset (SAO)

Sample-Adaptive Offset (SAO) was adopted in HEVC. The concept of SAO is to reduce mean sample distortion of a region (ex: one CTU) by first classifying the region samples into multiple categories with a selected classifier, obtaining an offset for each category, and then adding the offset to each sample of the category, where the classifier index and the offsets of the region are coded in the bitstream.

In SAO, offsets and parameters are signalled at CTU level.

SAO in HEVC

A thorough description of HEVC SAO can be found in C. -M. Fu et al., "Sample Adaptive Offset in the HEVC Standard, " in IEEE Transactions on Circuits and Systems for Video Technology, Vol. 22, No. 12, December 2012.

When enabled, the Coding Tree Unit (CTU) can be coded with 3 SAO modes (SaoTypeIdx): inactive (OFF), Edge Offset (EO) or Band Offset (BO). In case of EO or BO, one set of parameters per channel (Y,U,V) is coded, possibly shared with neighbouring CTUs. The SAO mode is the same for Cb and Cr components.

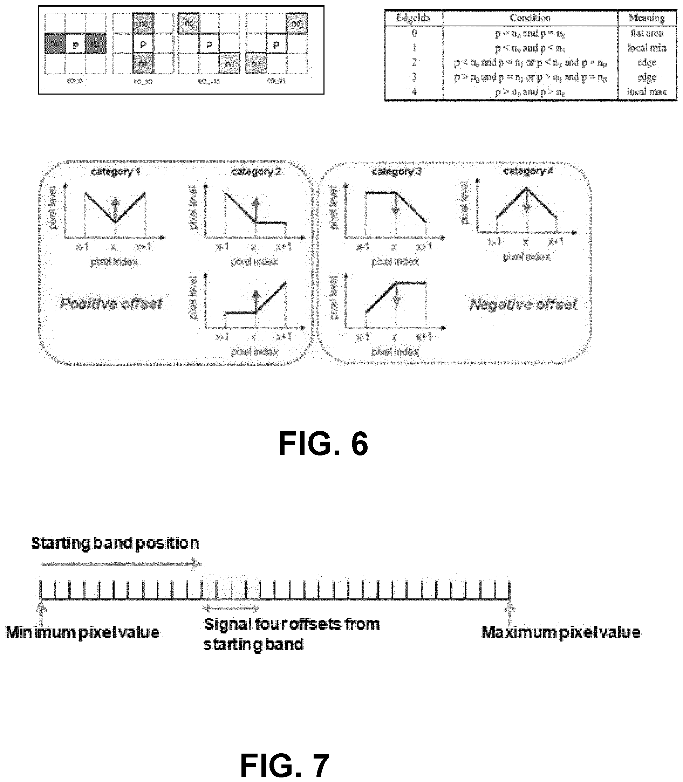

In case of EO, each reconstructed sample is classified into NC=5 categories (sao_eo_class), depending on the local gradients following one direction signalled per CTU (EO_0, EO_90, EO_135 or EO_45 corresponding to directions deg., 90 deg., 135 deg. or 45 deg.), as depicted in FIG. 6. (NC-1) offset values are coded, one for each category (one category has offset equal to zero). The offset sign is implicitly derived from the category.

In case of BO, the sample range of values for component 'c' (ex: 0 to 255, in 8-bits) is uniformly split into N(c)=32 bands and the sample values belonging to (NC-1)=4 consecutive bands are modified by adding an offset, off(n). Figure 4 shows an example of 4 consecutive bands. (NC-1) signed offset values and the starting band are coded, one for each of the (NC-1) bands (the remaining bands have offset equal to zero).

A look-up table (LUT) 'lut$_{SAO}$[c]' containing the offsets for each band is built for each component 'c'. It contains zero except for the NC-1 consecutives that contain offsets to be added to the reconstructed samples:

$$rec_{SAO}[x] = rec[x] + lut_{SAO}[c][\ rec[x] \gg s\ ] \quad (1)$$

where rec[x] is the reconstructed samples at position 'x' for the current component(c), before applying SAO, s is equal to (BD(c) - 5) and lut$_{SAO}$[c] contains the offsets for the component 'c', BD(c) is the bit-depth of the component 'c'.

In case of EO or BO, the SAO mode and offsets are possibly not coded but copied from the neighbouring above or left CTU (Merge mode).

Cross-component Sample-adaptive offset (CCSAO)

Cross-component Sample Adaptive Offset (CCSAO) was proposed in C.-W. Kuo et al., "AHG12: Cross-component Sample Adaptive Offset, JVET-V0153", adopted in ECM-3 then refined in ECM-4 described in "Algorithm description of Enhanced Compression Model 4 (ECM 4, JVET-Y2025".

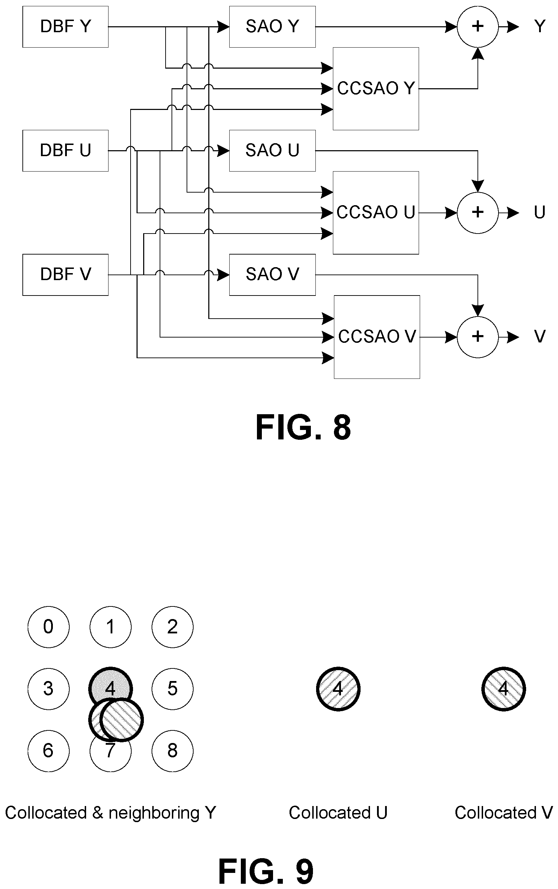

CCSAO is used to refine reconstructed chroma samples. Similarly to SAO, the CCSAO classifies the reconstructed samples into different categories, derives one offset for each category and adds the offset to the reconstructed samples in that category. However, different from SAO which only uses one single luma/chroma component of current sample as input, the CCSAO utilizes all three components to classify the current sample into different categories. To facilitate the parallel processing, the output samples from the de-blocking filter are used as the input of the CCSAO. FIG. 8 shows the diagram of the decoding workflow when the CCSAO is applied.

In CCSAO, only BO is used to enhance the quality of the reconstructed samples. For a given luma/chroma sample, three candidate samples are selected to classify the given sample into different categories: one collocated Y sample, one collocated U sample, and one collocated V sample. The sample values of these three selected samples are then classified into three different bands {$band_Y$, $band_U$, $band_V$}, and a joint index $i$ represents the category of the given sample. One offset is signaled and added to the reconstructed samples that fall into that category, which can be formulated as:

$$band_Y = (Y_{col} \cdot N_Y) \gg BD$$

$$band_U = (U_{col} \cdot N_U) \gg BD$$

$$band_V = (V_{col} \cdot N_V) \gg BD$$

$$i = band_Y \cdot (N_U \cdot N_V) + band_U \cdot N_V + band_V$$

$$C'_{rec} = Clip1(C_{rec} + \sigma_{CCSAO}[i])$$

where {$Y_{col}$, $U_{col}$, $V_{col}$} are the three selected collocated samples used to classify current sample; {$N_Y$, $N_U$, $N_V$} are the numbers of equally divided bands applied to {$Y_{col}$, $U_{col}$, $V_{col}$} full range respectively; $BD$ is the internal coding bit-depth; $C_{rec}$

and $C'_{rec}$ are the reconstructed samples before and after the CCSAO is applied; $\sigma_{CCSAO}[i]$ is the value of the CCSAO offset applied to i-th BO category. The collocated luma sample can be chosen from 9 candidate positions, while the collocated chroma sample positions are fixed, as depicted in FIG. 9.

Similar to SAO, different classifiers can be applied to different local region to further enhance the whole picture quality. The parameters for each classifier (i.e., the position of $Y_{col}$, $N_Y$, $N_U$, $N_V$, and offsets) are signaled at picture level, and the classifier to be used is explicitly signaled and switched at CTB level. For each classifier, the maximum of $\{N_Y, N_U, N_V\}$ is set to {16, 4, 4}, and offsets are constrained to be within the range [-15, 15]. At most 4 classifiers are used per frame.

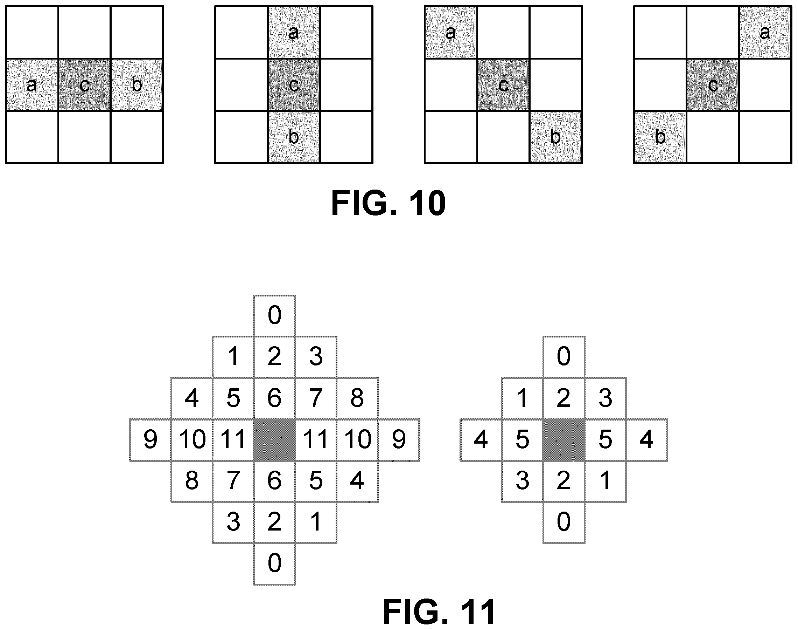

Similar to the edge classifier of SAO in VVC the edge-based classifier of CCSAO also uses the four 1-D directional patterns for sample classification: horizontal, vertical, 135° diagonal and 45° diagonal, as shown in FIG. 10.

For every 1-D pattern, each sample is classified based on the sample difference between the luma sample value labelled as "c" and its two neighbour luma samples labelled as "a" and "b" along the selected 1-D pattern.

Similar to SAO, the encoder may decide the best 1-D directional pattern using the rate-distortion optimization (RDO) and signal this additional information in each classifier/set. Both the sample differences "a-c" and "b-c" are compared against a pre-defined threshold value (Th) to derive the final "class_idx" information.

The encoder selects the best "Th" value from an array of pre-defined threshold values based on RDO and the index into the "Th" array is signalled.

Furthermore, an additional difference between CCSAO edge-based classifier and the SAO edge classifier in VVC is that, in the former, Chroma samples use the co-located Luma samples for deriving the edge information (samples "a", "c" and "b" are the co-located luma samples) whereas, in the later Chroma samples use its own neighbouring samples for deriving the edge information.

The Edge-based classifier process is formulated as follows:

$$Ea=(a\text{-}c<0)?\ (a\text{-}c<(\text{-}Th)?\ 0{:}1)\ :\ (a\text{-}c<(Th)?\ 2{:}3) \qquad (1)$$

$$Eb=(b\text{-}c<0)?\ (b\text{-}c<(\text{-}Th)?\ 0{:}1)\ :\ (b\text{-}c<(Th)?\ 2{:}3) \qquad (2)$$

$$class\_idx = i_B * 16 + Ea * 4 + Eb \qquad (3)$$

$$C'_{rec} = Clip1(C_{rec} + \sigma_{CCSAO}[class\_idx]) \qquad (4)$$

variable "$i_B$" in equation (3) is derived as follows.

$i_B = (\text{cur} \cdot N_{cur}) \gg BD$ (or) $i_B = (col1 \cdot N_{col1}) \gg BD$ (or) $i_B = (col2 \cdot N_{col2}) \gg BD$ (5) wherein, sample "cur" is the current sample being processed, $col1$ and $col2$ are the co-located samples. When Luma samples are processed, $col1$ and $col2$ are the co-located $C_b$ and $C_r$ samples respectively. When Chroma($C_b$) samples are processed, $coll$ and $col2$ are the co-located $Y$ and $C_r$ samples respectively. Similarly, When Chroma($C_r$) samples are processed, $col1$ and $col2$ are the co-located $Y$ and $C_b$ samples respectively.

Based on RDO, encoder signals one among the samples "cur", "$col1$", "$col2$" used in deriving the band information.

History-based CCSAO

It has been proposed in "C.-W. Kuo et al., "AHG 12: CCSAO with extended edge classifiers and history offsets, JVET AD0218″ to store the offsets/parameters of the current frame in a way similar to the APS design in VVC. In this method, an index is signalled in the slice header to indicate which set of stored offsets/parameters is inherited in the current slice.

Adaptive loop filter (ALF)

ALF is an adaptive filter that is applied to reduce the MSE between the original and the reconstructed samples, using for instance Wiener-filter encoding approaches.

ALF filters coefficients can be transmitted in the bitstream and decoded at decoder side, before being applied on reconstructed samples. Pre-trained ALF filters coefficients can also be hard-coded both at encoder and decoder sides.

ALF in VVC

In VVC, ALF filters are point-symmetrical, DC-neutral with integer coefficients. (Marta Karczewicz et al., "VVC In-Loop filters", in IEEE Transactions on Circuits and Systems for Video Technology, Vol. 31, No 10, October2021) ALF in VVC uses 7x7 diamond-shaped filters for Luma and 5x5 diamond-shaped filters Chroma, as depicted in FIG. 11.

Filtering operations

Let R(x, y) be a reconstructed sample and let $\bar{R}(x, y)$ denote its ALF-filtered value. In the linear implementation of ALF, $\bar{R}(x, y)$ is computed as:

$$\bar{R}(x,y) = R(x,y) + \left\lceil \sum_{i=0}^{N-2} c_i \times (\Delta R_i^+ + \Delta R_i^-) \right\rceil \tag{1}$$

Where $(c_i)_{0 \le i < N-1}$ denote the filter coefficients,
And:

$$\Delta R_i^+ = R(x + x_i, y + y_i) - R(x,y)$$
$$\Delta R_i^- = R(x - x_i, y - y_i) - R(x,y) \tag{2}$$

With $(\pm x_i, \pm y_i)$ denoting the coordinates offset corresponding to the reconstructed samples associated with the $i$-th coefficient $c_i$

In the non-linear implementation of ALF, Equation (1) becomes:

$$\bar{R}(x,y) = R(x,y) + \left\lceil \sum_{i=0}^{N-2} c_i \times (f_i^+ + f_i^-) \right\rceil \tag{3}$$

With:

$$f_i^+ = \min\big(b_i, \max\big(-b_i, R(x + x_i, y + y_i) - R(x,y)\big)\big)$$
$$f_i^- = \min\big(b_i, \max\big(-b_i, R(x - x_i, y - y_i) - R(x,y)\big)\big) \tag{4}$$

Where $b_i$ is the clipping parameter associated with the coefficient $c_i$, that is determined by a clipping index $d_i$. The clipping parameter $b_i$ is derived as follows:

$$b_i = \begin{cases} 2^{BD} & \text{when } d_i = 0 \\ 2^{BD-1-2d_i} & \text{otherwise} \end{cases} \tag{5}$$

Where $BD$ denotes the sample bit depth, and $d_i$ can be 0, 1, 2 or 3.

Integer arithmetic

Let NUM_BITS denote the number of bits used to represent ALF filter coefficients $c_i$ as signed integers.
ALF filtering operations are implemented as follows:

$$\bar{R}(x,y) = R(x,y) + \left\lceil \left( \left\lceil \sum_{i=0}^{N-2} c_i \times (f_i^+ + f_i^-) \right\rceil + \text{offset} \right) \gg \text{shift} \right\rceil \tag{6}$$

Where

$$\text{shift} = \text{NUM\_BITS} - 1 \tag{7}$$

And

$$\text{offset} = 1 \gg (\text{shift} - 1) \qquad\qquad (8)$$

Online filter optimization and offline pre-training:

ALF filter coefficients and clipping indices are determined at encoder side, for instance by solving Wiener-Hopf equations to minimize the MSE between reconstructed samples and their original values. If a rate-distortion condition is met, these coefficients and, if applicable, the corresponding clipping indices, are encoded in an Adaptation Parameter Set (APS). In VVC, an ALF APS may contain one Luma filter set and up to 8 Chroma filters.
VVC also allows the uses of pre-trained (pre-defined) Luma filters that are hard-coded both at encoder and decoder side.

ALF for Luma:

ALF for Luma presents a further local adaptation with a classification based on local gradients. ALF for Luma therefore relies on filter sets, that is a plurality of filters that comes together with a mapping list, each class of the classification being associated with a specific filter of the filter set. Depending on the classification, geometric filter transformations are applied, such as 90-degree rotation, diagonal or vertical flip, so that the same filter coefficients may apply to different classes depending on the local directionality.
A number of pre-trained Luma filter sets are available at encoder and decoder side. The encoder chooses according to a rate-distortion criterion whether it shall transmit the Luma filter set that has been optimized for the current slice/frame.
At CTU level, the encoder decides if ALF is performed and selects the Luma filter set that shall be used between the pre-trained filter sets and the filter sets that have already been transmitted.

ALF for Chroma:

In VVC, Chroma ALF does not implement local classification but uses instead region-adapted filters. Up to 8 ALF Chroma filters are available at the same time at encoder and decoder sides, and each Chroma CTB signals which filter it uses.

Further ALF developments in ECM:

ALF in Enhanced Compression Model (ECM) software presents further developments (JVET-AH2025 "Algorithm description of Enhanced Compression Model 13 (ECM13)"n M. Coban, R-L. Liao, K. Naser, J. Ström, L. Zhang, 34th meeting, Rennes, FR, 17-24 April 2024, §3.4), which main features are recapped below.

Alternative Luma filter sets:

In ECM, an ALF APS can contain up to four alternative Luma filter sets. In addition to an APS index, each CTU that uses ALF therefore signals a Luma filter set index, unless the specified APS contains a single Luma filter set.

Fixed ALF filters for Luma:

An intermediate filtering step is introduced for Luma, which consists in filtering reconstructed samples with pre-trained filters, called "fixed filters", before proceeding with the encoder-derived adaptive filters. Fixed filters parameters are stored both at encoder and decoder sides. In ECM-13, there are three fixed filters: $f_0$ $f_1$, and $f_2$. Fixed filters $f_0$ and $f_1$ use a classification.

Classification-based fixed filters:

Two Laplacian-based classifiers (one for each classification-based fixed filter) are applied to a 2x2 block. In each classifier, activity and directionality values are derived based on vertical, horizontal, and diagonal gradients using a window surrounding each 2x2 block. For each 2x2 block, the mean value of a surrounding window is calculated. Then, for each sample of this window, the difference between the sample value and the mean value is calculated. A scaling factor is determined based on the activity value derived from a Laplacian classifier. The square root of the sum of the squared differences is further quantized to *C'* by a scaling factor. The value of *C'* is an integer between 0 and 7, inclusively. Let $C_i$ denote the class index provided by the 896-class Laplacian classifier of i-th fixed filter, based on the activity and directionality values. The final class index $C_i'$ is derived as:

$$C_i' = C' \times 896 + C_i \qquad (9)$$

Two double diamond-shaped fixed filters are selected from the two fixed filter sets by using the derived two class indices $C_0'$ and $C_1'$. The first fixed filter $f_0$ is applied to sample values before DBF and ALF input, with an 13x13 diamond applying on ALF input and an additional 9x9 diamond applying to sample values before DBF. The second fixed filter $f_1$ is applied to output of $f_0$ and sample values before DBF, using a 9x9 diamond on each.

Gaussian fixed filter:

A third Luma fixed filter $f_2$ with a shape of diamond 7x7 is used, without classification. This fixed filter is referred to as the Gaussian fixed filter.

Signalled Luma filtering:

After fixed filtering, a signalled Luma filter is applied to the ALF input samples, samples before the deblocking filter (DBF), outputs of the two classifications-based fixed filters, output of the Gaussian fixed filter and the residual data.

The value of a final Luma filtered sample is computed as follows:

$$\tilde{R}(x, y) = R(x, y) + \left[ \sum_{i=0}^{19} c_i(f_i^+ + f_i^-) \right] + \left[ \sum_{i=20}^{25} c_i(g_{0,i}^+ + g_{0,i}^-) \right] + \left[ \sum_{i=26}^{27} c_i(h_i^+ + h_i^-) \right]$$

$$+ \left[ \sum_{i=28}^{33} c_i(g_{2,i}^+ + g_{2,i}^-) \right] + \left[ \sum_{i=34}^{34} c_i g_{0,1} \right] + \left[ \sum_{i=35}^{35} c_i g_{1,i} \right] + \left[ \sum_{i=36}^{36} c_i h_i \right] \qquad (10)$$

$$+ \left[ \sum_{i=37}^{37} c_i r_i \right] + \left[ \sum_{i=38}^{38} c_i rFiltered_i \right] + \left[ \sum_{i=39}^{39} c_i g_{2,i} \right]$$

where $f_i^{\pm}$ is the clipped difference between a neighboring sample and the current sample $R(x, y)$, $g_{0,i}^{\pm}$ is the clipped difference between an intermediate sample generated from the first fixed filter and the current sample $R(x,y)$, $g_{2,i}^{\pm}$ is the clipped difference between an intermediate sample generated from the third fixed filter and the current sample $R(x,y)$, $g_{0,34}$ **is** the clipped difference between the collocated intermediate sample generated from first fixed filter and the current sample $R(x,y)$, $g_{1,35}$ is the clipped difference between the collocated intermediate sample generated from second fixed filter and the current sample $R(x, y)$, $g_{2,39}$ is the clipped difference between the collocated intermediate sample generated from third fixed filter and the current sample $R(x,y)$, $h_i^{\pm}$ is the clipped difference between a neighboring sample before DBF and the current sample $R(x,y)$, $h_{36}$ is the clipped difference between the collocated sample before DBF and the current sample $R(x,y)$, and where $r_{37}$ is the clipped neighboring residual sample value and *rFiltered*$_{38}$ is the clipped residual sample filtered by a fixed-filter. For residual samples, the fixed filter used is a fixed filter from the first fixed filter set.

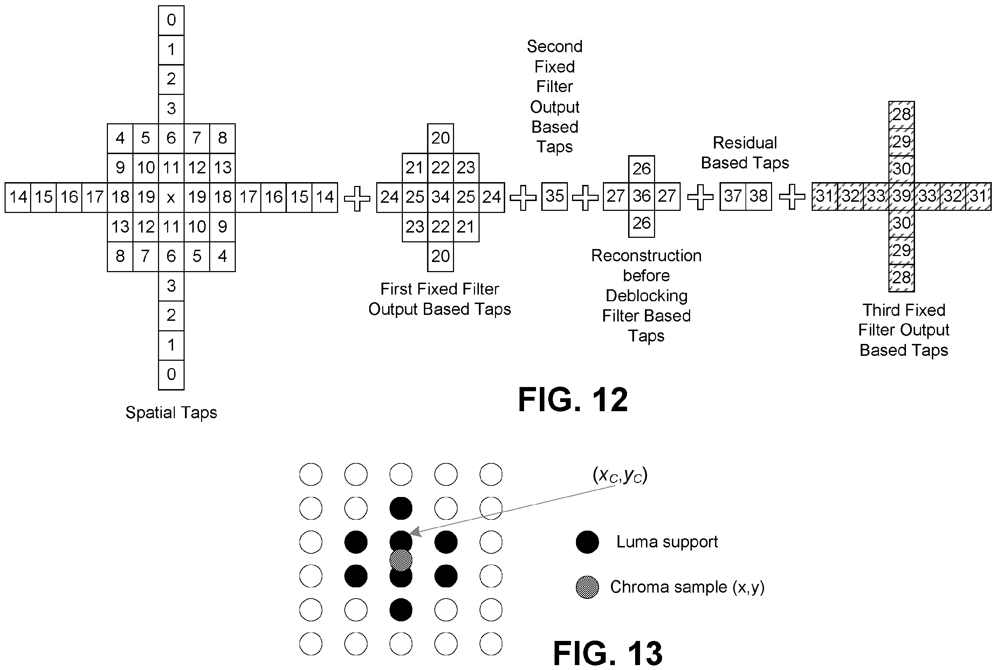

An example of filter shape of ALF using residual samples as additional inputs, corresponding is shown in FIG. 12.

Alternative band classifier for Luma:

Luma classification is extended with an additional alternative classifier. For a signalled Luma filter set, a flag is signalled to indicate whether the alternative classifier is applied. Geometrical transformation is not applied to the alternative band classifier. When the band-based classifier is applied, the sum of sample values of a 2x2 luma block is calculated at first. Then the class index is calculated as below:

class_index = (sum * 25) >> (sample_bit_depth + 2)       (11)

Residual based classifier for Luma:

A third classifier based on Luma residual sample values is also used for signalled Luma filter sets. For each 2x2 Luma block, the sum of absolute values of the residual samples in a neighbouring 8x8 window is calculated, and the class index is derived as:

$$classIdx = sum >> (sample\_bit\_depth - 4) \qquad (12)$$

The value of classIdx is in the range of 0 to 24. The classifier usage is signalled for each luma filter set in APS.

Chroma ALF fixed filtering:

A classifier based on Laplacian values and variance is applied to a 2x2 Chroma block. Compared to the Luma classifier of a fixed filter, when calculating the activity value, the sum of the Chroma vertical and horizonal Laplacian values is multiplied by 2 before scaling. Similarly, the Chroma variance is multiplied by 2 before scaling. The derived class index is then used to select a fixed filter from a Chroma filter set. A Chroma fixed filter is applied to Chroma ALF input samples in a 13x13 diamond shape and DBF input samples in a 7x7 diamond shape. The first fixed Luma filter classifier is applied to each 2x2 Chroma block. The derived class index is then used to select a fixed filter from the Luma fixed filter set related to this classifier. A fixed filter is applied to Chroma ALF input sample in a 9x9 diamond shape and DBF input samples in a 9x9 diamond shape. In a signalled Chroma filter, 5x5 crossing extra taps are introduced, which are applied to the fixed Chroma filter output.

Cross-component Adaptive loop filter (CCALF)

Cross-component Adaptive loop filter (CCALF) uses the Luma samples to refine Chroma sample values within the ALF process. CCALF is a linear filtering process. The correction is generated independently for each Chroma component:

$$\forall i \in \{Cb, Cr\} \quad \Delta R_i(x, y) = \sum_{(x_0, y_0) \in S_i} R_Y(x_C + x_0, y_C + y_0) . c_i(x_0, y_0) \qquad (8)$$

Where $R_Y$ denotes the reconstructed Luma sample before ALF, $(x,y)$ is the sample location of the Chroma component, $(x_C, y_C)$ is the Luma sample location derived from $(x,y)$, $(x_0, y_0)$ denotes the filter support offset around $(x_C, y_C)$, $S_i$ is the filter support region in Luma for the Chroma component $i$, and $c_i(x_0, y_0)$ denotes the filter coefficient of component $i$ for position offset $(x_0, y_0)$.

CCALF in VVC:

In VVC, CCALF filter has a diamond shape, as can be seen on the example of FIG. 13. CCALF does not enforce point-symmetry constraint in its coefficient. In order to preserve DC-neutrality, the sum of CCALF coefficients values is required to be zero. CCALF filters are optimized at encoder side and transmitted in the bitstream in Alf APSs. An ALF APS contains up to four CCALF filters per Chroma components. Each CTU signals the CCALF filters it uses.

Reuse of ALF control information

It has been proposed in M. Karczewicz et al., "Non-EE2: Reuse of ALF control information, JVET-AI0280" that ALF control information, including on/off decision and ALF APS usage information, may be reused from a previously encoded picture.

At encoder side, ALF filters are derived for a set of non-reference pictures which share the ALF on/off decision.

Example of GOP prediction structure

The following table provides an example of GOP temporal prediction structure for a size of 32. The first column indicates the order in which pictures are encoded and decoded. The second column indicates each picture's order count (POC), that is, its position in the video stream. The third column shows each picture's temporal id (Tid), that indicates its level in the hierarchical temporal prediction structure. Tid is also referred in the document as temporal level. Fourth and fifth columns are L0 and L1 prediction lists, respectively. In addition to POC offsets, reference POCs are provided between parentheses.

**Table 1: Example of prediction reference settings (L0 and L1 lists) for a group of 32 frames**

| Picture coding order | POC | Tid | L0 list reference POC offset (ref POC) | | | | | L1 list reference POC offset (ref POC) | | | | |
|---|---|---|---|---|---|---|---|---|---|---|---|---|
| 0 | 0 | 0 | (intra) | | | | | | | | | |
| 1 | 32 | 0 | 32 (0) | | | | | 32 (0) | | | | |
| 2 | 16 | 1 | 16 (0) | | | | | -16 | | | | |
| 3 | 8 | 2 | 8 (0) | | | | | -8 (16) | -24 | | | |
| 4 | 4 | 3 | 4 (0) | | | | | -4 (8) | -12 | -28 | | |
| 5 | 2 | 4 | 2 (0) | | | | | -2 (4) | -6 (8) | -14 | -30 | |
| 6 | 1 | 5 | 1 (0) | | | | | -1 (2) | -3 (4) | -7 (8) | -15 | -31 (32) |
| 7 | 3 | 5 | 1 (2) | 3 (0) | | | | -1 (4) | -5 (8) | -13 | -29 | |
| 8 | 6 | 4 | 2 (4) | 4 (2) | 6 (0) | | | -2 (8) | -10 | -26 | | |
| 9 | 5 | 5 | 1 (4) | 5 (0) | | | | -1 (6) | -3 (8) | -11 | -27 | |
| 10 | 7 | 5 | 1 (6) | 3 (4) | 7 (0) | | | -1 (8) | -9 | -25 | | |
| 11 | 12 | 3 | 4 (8) | 8 (4) | 12 | 6 (6) | | -4 (16) | -20 | | | |
| 12 | 10 | 4 | 2 (8) | 4 (6) | 6 (4) | 10 | | -2 (12) | -6 | -22 | | |
| 13 | 9 | 5 | 1 (8) | 5 (4) | 9 (0) | | | -1 (10) | -3 | -7 | -23 | |
| 14 | 11 | 5 | 1 (10) | 3 (8) | 11 | | | -1 (12) | -5 | -21 | | |
| 15 | 14 | 4 | 2 (12) | 4 (10) | 6 (8) | 14 | | -2 (16) | -18 | | | |
| 16 | 13 | 5 | 1 (12) | 5 (8) | 13 | | | -1 (14) | -3 | -19 | | |
| 17 | 15 | 5 | 1 (14) | 3 (12) | 7 (8) | 15 | | -1 (16) | -17 | | | |
| 18 | 24 | 2 | 8 (16) | 16 (8) | 24 | | | -8 (32) | | | | |
| 19 | 20 | 3 | 4 (16) | 12 (8) | 20 | | | -4 (24) | -12 | | | |
| 20 | 18 | 4 | 2 (16) | 10 (8) | 18 | | | -2 (20) | -6 | -14 | | |
| 21 | 17 | 5 | 1 (16) | 9 (8) | 17 | | | -1 (18) | -3 | -7 | -15 | |
| 22 | 19 | 5 | 1 (18) | 3 (16) | 19 | | | -1 (20) | -5 | -13 | | |
| 23 | 22 | 4 | 2 (20) | 6 (16) | 22 | | | -2 (24) | -10 | 4 (18) | | |
| 24 | 21 | 5 | 1 (20) | 5 (16) | 21 | | | -1 (22) | -3 | -11 | | |
| 25 | 23 | 5 | 1 (22) | 3 (20) | 7 | 23 | | -1 (24) | -9 | | | |
| 26 | 28 | 3 | 4 (24) | 8 (20) | 12 | 28 | | -4 (32) | | | | |
| 27 | 26 | 4 | 2 (24) | 6 (20) | 10 | 26 | | -2 (28) | -6 | | | |
| 28 | 25 | 5 | 1 (24) | 5 (20) | 9 | 25 | | -1 (26) | -3 | -7 | | |
| 29 | 27 | 5 | 1 (26) | 3 (24) | 11 | 27 | | -1 (28) | -5 | | | |
| 30 | 30 | 4 | 2 (28) | 6 (24) | 14 | 30 | | -2 (32) | | | | |
| 31 | 29 | 5 | 1 (28) | 5 (24) | 13 | 29 | | -1 (30) | -3 | | | |
| 32 | 31 | 5 | 1 (30) | 3 (28) | 7 | 15 | 31 | -1 (32) | | | | |
| 33 | 64 | 0 | 32 | 64 (0) | 48 | 40 | 36 | 32 | 48 | | | |
| 34 | 48 | 1 | 16 | 32 | 48 | 24 | 20 | -16 | | | | |
| 35 | 40 | 2 | 8 (32) | 24 | 16 | 40 | 12 | -8 (48) | -24 | | | |
| 36 | 36 | 3 | 4 (32) | 8 (28) | 20 | | | -4 (40) | -12 | -28 | | |
| 37 | 34 | 4 | 2 (32) | 6 (28) | 18 | | | -2 (36) | -6 | -14 | -30 | |

As described above, in-loop filter syntax may consist of filter/offset parameters (such as filter coefficients and clipping parameters for ALF & CCALF, and such as modes and offsets for SAO & CCSAO) and of filtering control information (such as on/off flags and APS / filter / parameter set indices). Both those kinds of syntax elements have a cost, that mitigates the potential gains of in-loop filters.

Embodiments described herein provide for deriving loop filter control information from a reference frame instead of explicitly signalling the loop filter control information.

In the document, loop filter control information refers to in-loop filter syntax mentioned above and comprises the parameters required for the filtering such as filter/offset parameters (such as filter coefficients and clipping parameters for ALF & CCALF, and such as modes and offsets for SAO & CCSAO) and also the filtering control information, such as on/off flags and APS / filter / parameter set indices.

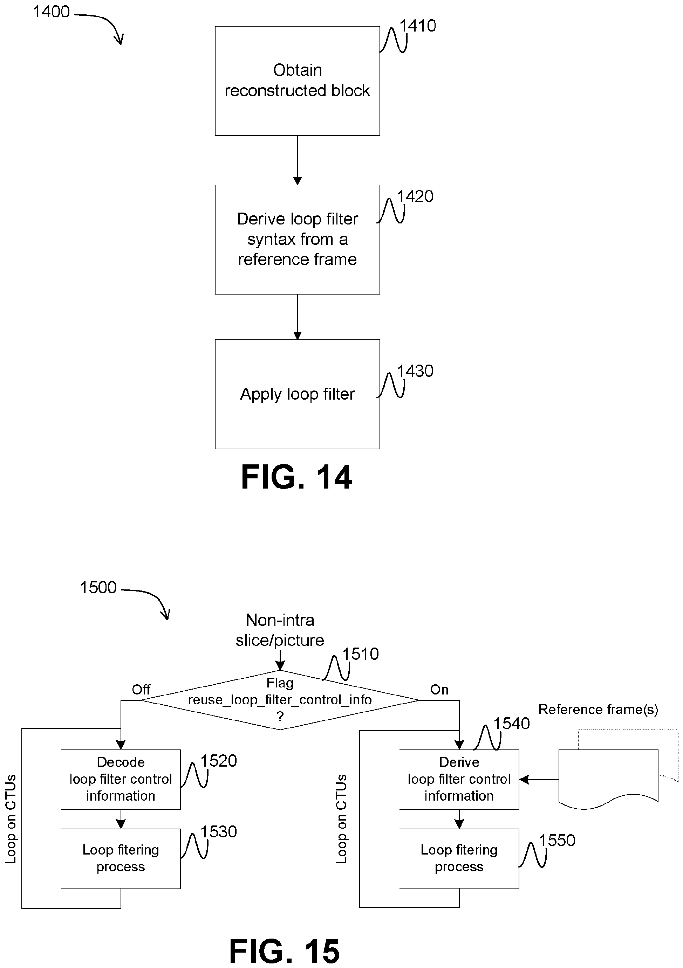

FIG. 14 illustrates an example of a method 1400 for deriving loop filter control information for a block according to an embodiment. The method can be implemented in a similar manner on the encoding side and the decoding side. And thus, the method can be implemented for example in the encoding method described in relation with FIG. 2 for encoding a video in a bitstream or in the decoding method described in relation with FIG. 3 for decoding a video from a bitstream. At 1410, a reconstructed version of a block of a picture or frame of the video is obtained. For example, the block is obtained at 255 in FIG. 2 or at 355 in FIG. 3 before being input to in-loop filters modules (265, 365). At 1420, loop filter control information is derived for the block from loop filter control information used in a reference frame of the video. In some embodiments, deriving the loop filter control information for the block uses at least one motion vector used for reconstructing the block. In other embodiments, loop filter control information for the block is derived from a collocated block in the reference frame.

The loop filter control information derived at 1420 can relate to any one of the loop filters mentioned above, such as Luma ALF, Chroma ALF, CCALF, Luma SAO, Chroma SAO, CCSAO.

In some variants of these embodiments, a list of candidate reference frames is derived from at least one of a first list of reference frames storing previously decoded past frames (L0) or a second list of reference frames storing previously decoded future frames (L1). The reference frame is then selected in this list of candidate reference frames, for example using a decoded reference frame index for the block, or for the current picture or using the reference frame index associated with the motion data of the block.

At 1430, the loop filter is applied to the reconstructed version of the block using the derived loop filter control information.

Embodiments described herein especially suit the case of ALF and CCALF, as well as SAO and CCSAO, but can also be implemented with any kind of in-loop filters that would require control information.

In the case of ALF & CCALF, loop filter control information may consist of on/off flags, APS indices, filter set indices and filter indices.

In the case of SAO & CCSAO, loop filter control information may consist of on/off flags, modes (Edge Offset, Band Offset, OFF) and parameter set indices. Parameter set indices can be EO classes, offsets for both SAO and CCSAO, and pre-defined threshold value, optimal collocated Luma sample in case of CCSAO. Loop filter control information can be used partially (for example only modes and/or EO classes) or totally (modes and all parameter set indices) from reference frames. In case of partial derivation, the other parameters of SAO or CCSAO can be derived from the current CTU or neighbours CTU.

FIG.15 illustrates another embodiment for deriving loop filter control information. In this embodiment, a flag is signalled at picture/slice level in non-intra pictures, said flag specifying whether loop filter control information for current picture/slice shall be derived from a reference frame. The loop filter control information may for instance refer to control information relating to ALF, CCALF, SAO and CCSAO, or any loop filter that require filter control information

At 1510, it is determined whether loop filter control information from a reference frame is reused. For example, this determination can be based on an indication signaled in the bitstream. For example, the indication is a flag signalled at picture/slice level for the current picture. This flag, named reuse_loop filter control_info in the following, specifies whether loop filter control information is reused from a reference frame. If it is determined at 1510 that loop filter control information from a reference frame is reused, then a loop is done on all CTUs of the current picture and for each CTU, at 1540, loop filter control information for a current CTU is obtained from stored loop filter control information from a reference frame. In a first variant, loop filter control information is obtained from the reference frame using motion data used for the current CTU, i.e. using motion vectors.

In a second variant, for a current CTU, loop filter control information of a collocated block in the reference frame is obtained and used for the current CTU, e.g. CTU-wise. In a further variant, if more than one reference frame can be used to retrieve loop filter control information, an additional syntax element can be used to specify which reference frame is used among the list(s) of reference frames. More details regarding these variants are provided below. At 1550, loop filtering is applied to the CTU using the derived loop filter control information.

In a variant, an indication can be further signaled with the flag *reuse_loop_filter_control_info* to indicate which variants is used for deriving the loop filter control information from the reference frame. For example, a first value of the indication indicates that loop filter control information is derived from motion data of the CTUs while another value of the indication indicates that loop filter control information is derived from collocated CTU in the reference frame. This indication can be signalled at a same level as the flag *reuse_loop_filter_control_info* or at a finer level.

If it is determined at 1510 that loop filter control information from a previous decoded picture is not reused, then a loop is done on all CTUs of the current picture and for each CTU at 1520, loop filter control information is decoded for the current CTU. At 1530, loop filtering is applied to the CTU using the decoded loop filter control information.

Whatever the loop filter, embodiment described herein advantageously allows to specify with a single flag at picture/slice level the whole control information that would require several indices per CTU (e.g. an APS index and a filter index). Compared with JVET-AI0280, in-loop filter control information is advantageously fetched in a reference frame, instead of a previous non-reference frame.

In the case of ALF/CCALF, loop filter control information may consist of ALF/CCALF on/off flags, ALF APS indices, Luma ALF filter set indices and Chroma ALF / CCALF filter indices.

In the case of SAO/CCSAO, loop filter control information may consist of on/off flags, modes (Edge Offset, Band Offset, OFF) and parameter set indices. Parameter set indices can be EO classes, offsets for both SAO and CCSAO, and pre-defined threshold value, optimal collocated Luma sample in case of CCSAO. The loop filter control information can be used partially (for example only modes and/or EO classes) or totally (modes and all parameter set indices) from reference frames. In the case of partial derivation, the other parameters of SAO or CCSAO can be derived from the current CTU or neighbours CTU.

As an example, in the case of ALF/CCALF, a first flag *reuse_loop_filter_control_info1* can be dedicated to Luma ALF control information, a second flag *reuse_loop_filter_control_info2* to Chroma ALF control information, and a third flag *reuse_loop_filter_control_info3* to CCALF control information. In a variant, Chroma ALF flag *reuse_loop_filter_control_info* and CCALF flag *reuse_loop_filter_control_info* are conditioned by the Luma ALF flag *reuse_loop_filter_control_info*; that is: Chroma ALF and the CCALF flags *reuse_loop_filter_control_info* are signalled only if the Luma ALF flag *reuse_loop_filter_control_info* is on.

In another example, still in the case of ALF/CCALF, a single flag *reuse_loop_filter_control_info* triggers loop filter control information derivation for both Luma ALF, Chroma ALF and CCALF.

In the following, two embodiments are further described. In a first embodiment, loop filter control information is derived using motion vectors (MVs). In a second embodiment, loop filter control information is derived using collocated information, e.g. CTU-wise.

In an embodiment, loop filter control information is derived from reference frames using motion vectors (MVs) in current frames' coding units (CU) that are inter-coded. In other words, motion data that is used for reconstructing a current inter-coded CU is used for deriving the loop filter control information.

In this embodiment, for intra-coded CUs or intra-coded partitions of CUs in an inter slice, motion data is not available. For these intra-coded CUs in pictures/slices where loop filter control information derivation is activated, loop filter may be disabled.

In another variant for the intra-coded CUs or intra-coded partitions of CUs, one can derive motion vector for the CU, for example from motion data of neighboring CUs. When one cannot determine neither derive at least one motion vector for an intra-coded CU, loop filter can be disabled.

List of candidate reference frames for control information derivation

In a variant, in order to limit the memory footprint, a reduced list of candidate reference frames can be derived as a subset of L0 and L1 lists. This list is built consistently both at encoder and decoder sides from reference frames available in the DPB. For example, a number $N_0$ first reference frames from L0 and a number $N_1$ of the first reference frames from L1 are taken to build the candidate reference frames for control information derivation. In another variant, reference frames with lower temporal level than the temporal level of the current frame in a hierarchical structure of a group of frames are used as candidate reference frames for control information derivation.

In another variant, only reference frames from L0 are used as candidate reference frame for control information derivation. In another variant, only reference frames from L1 are used as candidate reference frame for control information derivation.

In another variant, every reference frame of L0 and L1 lists can be used as candidate reference frame for control information derivation.

In both variants, loop filter control information of every candidate reference frame shall be stored.

In this embodiment, the reference frame from which a CU derives loop filter control information is the reference frame from which the CU has been predicted and thus the reference frame associated with the CU's motion vector.

Sample-wise control information derivation

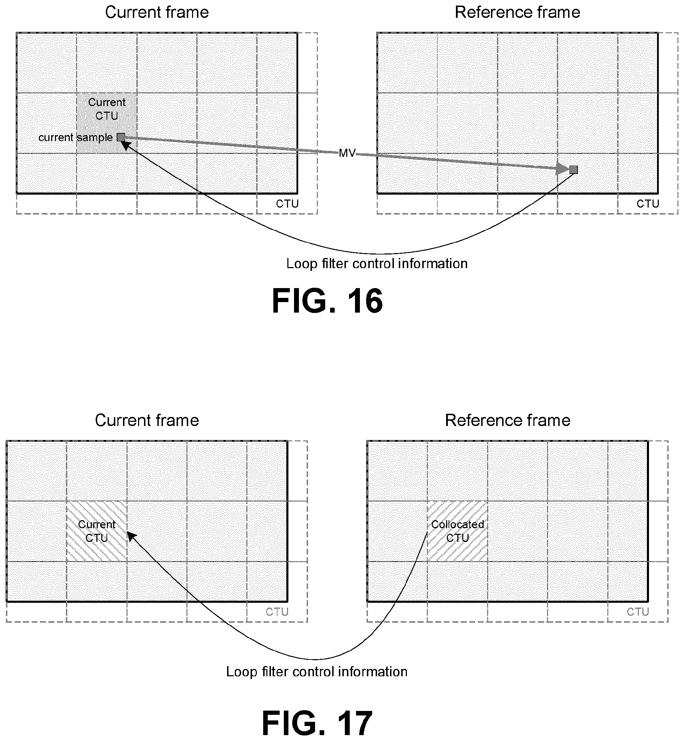

In a variant, loop filter control information derivation using motion vectors is performed sample-wise. As an example, in this variant, given an inter-coded CU in a picture/slice where ALF/CCALF control information derivation is activated, and provided that at least one of its reference frames belongs to the candidate reference list, every sample uses the filter (for CCALF and Chroma ALF) or the filter set (for Luma ALF) specified by the ALF APS index and the corresponding alternative filter index (respectively filter set index) of the nearest sample pointed at in the candidate reference frame by the motion vector of the inter-coded CU, as depicted in FIG. 16.

In the same way, given an inter-coded CU in a picture/slice where SAO/CCSAO control information derivation is activated, and provided that at least one of its reference frames belongs to the candidate reference list, every sample uses the corresponding alternative mode and parameter set indices, partially or totally, of the nearest sample pointed at in the candidate reference frame by the motion vector of the inter-coded CU, as depicted in FIG. 16.

Subblock-wise control information derivation

In a variant, loop filter control information derivation using motion vectors is performed on a subblock basis, e.g. 4x4 or 8x8. As an example, in that variant, the loop filter control information used for a current subblock is derived from the reference CTU where belongs the nearest reference sample pointed at by the MV of the top-left (or top-right, bottom-right, bottom-left, or one of the inner) sample of the current subblock.

Handling reference samples for which the loop filter is disabled

In a variant, if the reference sample considered for loop filter control information derivation belongs to a reference CTU where the loop filter considered is disabled, that loop filter is not performed for the current sample.

In another variant, if the reference sample considered belongs to a reference CTU where the loop filter considered is disabled, loop filter control information for current sample is derived from collocated CTU in the reference frame as a fallback. If the loop filter is disabled in collocated CTU in the reference frame as well, it is not performed for the current sample.

Number of motion vectors used for loop filter control information derivation

In a first variant, only one motion vector (MV) is used for loop filter control information derivation. As an example, that single MV can be determined as the first MV of current CU.

In another variant, several MVs can be considered for loop filter control information derivation. As an example, ALF/CCALF can be performed as many times as there are available MVs used the current CU (i.e. twice for bidirectional prediction, potentially more in the case of multi-hypothesis prediction), then the respective outcomes of the plurality of ALF/CCALF filtering processes are blended together (e.g. averaged, or weighted).

In the case of SAO/CCSAO, the CTU can be filtered using parameter set indices and modes pointed by each MV, then the parameter set indices and modes that yield the lowest distortion are selected and signaled. On the decoder side, when the CTU has multiple motion vectors, then this signaling is decoded to identify which motion vector to use for loop filter control information derivation.

This variant of selecting according to a lowest distortion cost and signaling could be implemented in the ALF/CCALF case also, and to any loop filter for which loop filter control information derivation is done.

As another example in the ALF/CCALF case, filter coefficients and clipping parameters of the plurality of filters are blended together (e.g. averaged, or weighted) into a single set of ALF/CCALF filters, and ALF/CCALF is performed only once using this single set.

Loop filter control information simplification for recurrence

In a variant, loop filter control information stored for derivation in subsequent frames is simplified, in order to make recurrent derivation advantageously less requiring in memory consumption and access. As an example in the case of ALF/CCALF, a single flag, a single APS index, and a single set of Luma ALF / Chroma ALF / CCALF filters are stored per CTU. Those unique flags/indices stored may for instance correspond to the top-left sample of CTU, or to an inner sample of the CTU.

Loop filter control information derivation with collocated information

In another embodiment, loop filter control information is derived co-locally from reference frames. In a variant, loop filter control information derivation can be performed CTU-wise: each CTU uses the loop filter control information of its collocated CTU in a reference frame, as depicted in FIG. 17.

A first step consists in determining the candidate reference frame(s) for loop filter control information derivation. In a variant, the candidate reference frame used for all samples of current picture may be signalled, for example an index of the reference frame in the DPB (Decoded Picture Buffer) to be used to derive the loop filter control information is signalled at the picture/slice level. In another variant, the candidate reference frame is not signalled but determined in a similar manner at the encoder and the decoder. In an example, it can be one of collocated frames, that is: a reference frame (past and/or future) with closest POC (Picture Order Count) to the current POC.

In another variant, loop filter control information can be derived from more than one frames. In this variant, both encoder and decoder consistently build a list of candidate reference frames for control information derivation. That list can for example consist of the L0 list, or of the L1 list, or of L0+L1, or of any subset of those.

Variant with multiple candidate reference frames for loop filter control information derivation

In that variant, loop filter control information of every candidate reference frame for derivation shall be stored.

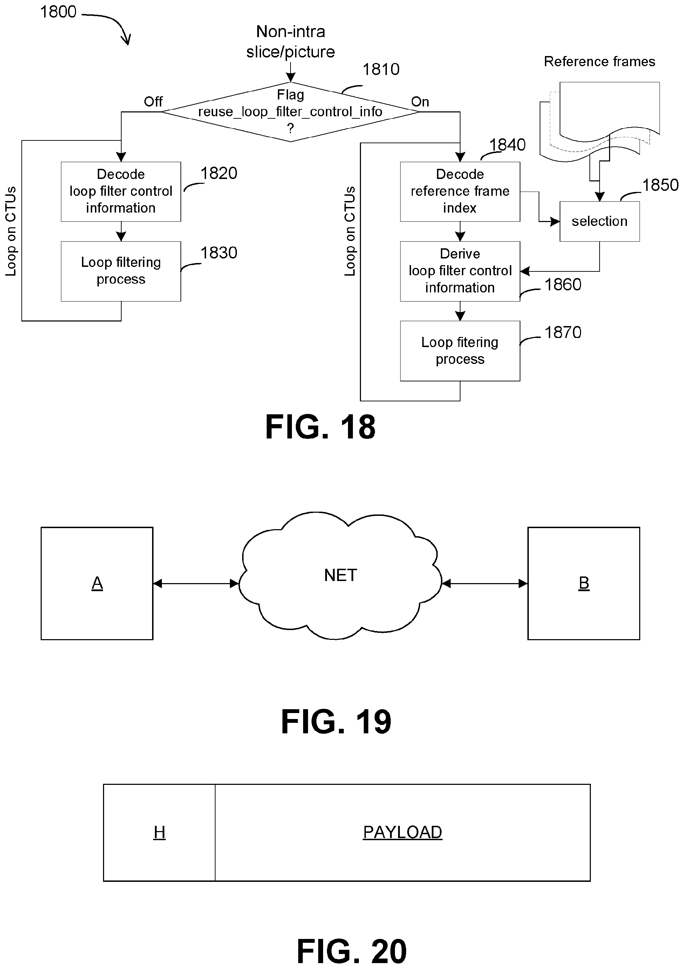

In this variant, an additional syntax element is signalled at CTU level in pictures/slices where loop filter control information derivation is activated. That additional syntax element consists in a reference frame index that specifies which candidate reference frame among the list of candidate reference frames is used for loop filter control information derivation for the current CTU, as depicted in FIG. 18.

At 1810, it is determined whether loop filter control information from a reference frame is reused. For example, this determination can be based on an indication signaled in the bitstream as in FIG. 15. If it is determined at 1810 that loop filter control information from a reference frame is reused, then a loop is done on all CTUs of the current picture and for each CTU, the following steps are done. At 1840, a reference frame index is decoded for a current CTU and at 1850 the reference frame is selected from the list of candidate reference frames. At 1860, loop filter control information for the current CTU is obtained from stored loop filter control information from the collocated CTU in the selected reference frame. At 1870, loop filtering is applied to the current CTU using the derived loop filter control information.

If it is determined at 1810 that loop filter control information from a reference frame is not reused, then a loop is done on all CTUs of the current picture and for each CTU at 1820, loop filter control information is decoded for the current CTU and at 1830, loop filtering is applied to the current CTU using the decoded loop filter control information.

As an example, in the variant illustrated with FIG. 18, in the case of ALF/CCALF, each CTU then uses the filter (for CCALF and Chroma ALF) or the filter set (for Luma ALF) referenced by the ALF APS index and the corresponding alternative filter index (respectively filter set index) of the collocated CTU of the reference frame selected for the CTU.

As another example, in the variant illustrated with FIG. 18, in the SAO/CCSAO case, each CTU uses the mode and parameter set indices corresponding to the mode and parameter set indices of the collocated CTU of the reference frame selected for the CTU.

Compared with JVET-AI0280, this variant differs with the use of the advantageous additional syntax element that allows the encoder to select which candidate reference frame presents the best control information for the current CTU.

Variant where a candidate reference frame index is assumed for the whole picture

In another variant, a candidate reference frame index is assumed for the whole slice/picture. For example, the candidate reference frame is the reference frame (past and/or future) with closest POC to the current POC.

In that variant, if the reuse flag at slice/picture level is on, every CTU derives collocated loop filter control information from that assumed candidate reference frame. If the flag is off, further syntax elements are signalled to indicate whether another candidate reference frame is used for every CTU of current slice/picture, or if candidate reference frame indices are signalled at CTU level.

In an embodiment, illustrated in FIG. 19, in a transmission context between two remote devices A and B over a communication network NET, the device A comprises a processor in relation with memory RAM and ROM which are configured to implement a method for encoding a video according to any one of the embodiments described herein and the device B comprises a processor in relation with memory RAM and ROM which are configured to implement a method for decoding a video according to any one of the embodiments described herein. In accordance with an example, the network is a broadcast network, adapted to broadcast/transmit a coded video from device A to decoding devices including the device B.

FIG. 20 shows an example of the syntax of a signal transmitted over a packet-based transmission protocol. Each transmitted packet P comprises a header H and a payload PAYLOAD. In some embodiments, the payload PAYLOAD may comprise coded data representative of a video encoded according to any one of the embodiments described above. The payload can also comprise any signaling as described above. For example, the signal comprises an indication for at least one block of a current picture of the video, the indication indicating that loop filter control information of a reference frame is reused, an indication indicating whether loop filter control information is derived using motion data or from collocated CTU, an index of a reference frame signaled at picture or slice level, an index of a reference frame signaled at CTU level.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above. One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1.   A method comprising:

   obtaining a reconstructed version of a block of a video,
   deriving loop filter control information for the block from loop filter control information used in a reference frame of the video,
   applying one or more loop filters to the reconstructed version of the block using the derived loop filter control information.

2.   The method of claim 1, wherein deriving the loop filter control information for the block uses at least one motion vector used for reconstructing the block.

3.   The method of claim 1 or 2, wherein the method further comprises decoding a flag at a picture level or a slice level indicating that loop filter control information is reused from a previously decoded frame and wherein deriving loop filter control information for the block depends on a value of the decoded flag.

4.   The method of any one of claims 1-3, wherein the loop filter is at least one of Luma ALF, Chroma ALF, CCALF, Luma SAO, Chroma SAO, CCSAO.

5.   The method of any one of claims 1-4, wherein the method comprises deriving a list of a candidate reference frames from at least one of a first list of reference frames storing previously decoded past frames or a second list of reference frames storing previously decoded future frames.

6. The method of claim 2, wherein a current sample of the block uses loop filter control information of a nearest sample in the reference frame pointed at by the at least one motion vector from the current sample.

7. The method of claim 2, wherein the block comprises a plurality of subblocks, all samples of a subblock of the block uses loop filter control information of a reference block in the reference frame, the reference block being a block to which belongs a nearest sample pointed at by the at least one motion vector from a sample of the subblock.

8. The method of claim 6 or 7, wherein when loop filter is disabled for the nearest sample, loop filter is disabled for the current sample or the subblock.

9. The method of claim 6 or 7, wherein when loop filter is disabled for the nearest sample, loop filter control information is derived for the current sample or the subblock from a collocated block in the reference frame.

10. The method of any one of claims 6-9, wherein the reference frame belongs to a list of a candidate reference frames.

11. The method of claim 2, wherein when at least two motion vectors are used for reconstructing the block, at least two loop filter control information are derived for the block using respectively the at least two motion vectors,

    at least two loop filters are applied to the block using respectively the at least two loop filter control information providing at least two filtered versions of the block, and
    the at least two filtered versions of the block are blended.

12. The method of claim 2, wherein when at least two motion vectors are used for reconstructing the block, at least two loop filter control information are derived for the block using respectively the at least two motion vectors,

    at least two loop filters are applied to the block using respectively the at least two loop filter control information providing at least two filtered versions of the block,
    a loop filter control information among the at least two loop filter control information that provides a lowest cost is selected, and
    the selected loop filter control information is signaled.

13. The method of claim 2, wherein when at least two motion vectors are used for reconstructing the block, at least two loop filter control information are derived for the block using respectively the at least two motion vectors,

    parameters of the at least two loop filter control information are blended, and
    the loop filter is applied to the block using the blended parameters.

14. The method of claim 1, wherein loop filter control information for the block is derived from a collocated block in the reference frame.

15. The method of claim 14, further comprising identifying the reference frame, wherein the reference frame is identified by one of:

    an indication indicating the reference frame in a decoded picture buffer, the indication being decoded at a picture level or slice level, or
    the reference frame is a same as a collocated frame, or
    the reference frame is a reference frame having a Picture Order Count that is closest to a Picture Order Count of a current frame to which the block belongs,
    an indication indicating the reference frame in a list of candidate reference frames, the indication being decoded at a block level.

**FIG. 1**

ORIGINAL VIDEO → IMAGE PARTITIONER (202)

RESIDUAL BLOCKS → TRANSFORMER (220) → QUANTIZER (230) → ENTROPY ENCODER (245) → BITSTREAM

(210)

PREDICTION BLOCKS

QUANTIZER (230)

INVERSE QUANTIZER (240)

INVERSE TRANSFORMER (250)

RECONSTRUCTED RESIDUAL BLOCKS

PREDICTION BLOCKS

(255) +

RECONSTRUCTED BLOCKS

INTRA PREDICTOR (260)

IN-LOOP FILTERS (265)

PREDICTION ENHANCER (285)

(205)

MOTION COMPENSATOR (270)

MOTION ESTIMATOR (275)

REFERENCE PICTURE BUFFER (280)

(200)

FIG. 2

**FIG. 3**

FIG. 4A

FIG. 4B

FIG. 5

| EdgeIdx | Condition | Meaning |
|---|---|---|
| 0 | $p = n_0$ and $p = n_1$ | flat area |
| 1 | $p < n_0$ and $p < n_1$ | local min |
| 2 | $p < n_0$ and $p = n_1$ or $p < n_1$ and $p = n_0$ | edge |
| 3 | $p > n_0$ and $p = n_1$ or $p > n_1$ and $p = n_0$ | edge |
| 4 | $p > n_0$ and $p > n_1$ | local max |

## FIG. 6

## FIG. 7

## FIG. 8

Collocated & neighboring Y　　　　Collocated U　　　　Collocated V

## FIG. 9

**FIG. 10**

**FIG. 11**

Spatial Taps

First Fixed Filter
Output Based Taps

Second
Fixed
Filter
Output
Based
Taps

Reconstruction
before
Deblocking
Filter Based
Taps

Residual
Based Taps

Third Fixed
Filter Output
Based Taps

**FIG. 12**

$(x_C, y_C)$

● Luma support

▨ Chroma sample $(x,y)$

**FIG. 13**

1400 ⟍

```
                    ┌─────────────────┐  ⟋1410
                    │                 │
                    │     Obtain      │
                    │ reconstructed   │
                    │     block       │
                    └────────┬────────┘
                             │
                             ▼
                    ┌─────────────────┐  ⟋1420
                    │  Derive loop    │
                    │  filter syntax  │
                    │   from a        │
                    │ reference frame │
                    └────────┬────────┘
                             │
                             ▼
                    ┌─────────────────┐  ⟋1430
                    │                 │
                    │ Apply loop      │
                    │    filter       │
                    │                 │
                    └─────────────────┘
```

## FIG. 14

1500 ⟍

Non-intra
slice/picture

```
                              │   ⟋1510
                              ▼
        Off      ◇ Flag reuse_loop_filter_control_info ? ◇    On        Reference frame(s)
         │                                                     │
         ▼                                                     ▼   ⟋1540
   ┌────────────┐  ⟋1520                              ┌────────────┐
   │  Decode    │                                     │  Derive    │◄──────┐
   │ loop filter│                                     │ loop filter│       │
   │  control   │                                     │  control   │       │
   │information │                                     │information │       │
   └─────┬──────┘                                     └─────┬──────┘
         │                                                  │
         ▼                                                  ▼   ⟋1550
   ┌────────────┐  ⟋1530                              ┌────────────┐
   │   Loop     │                                     │   Loop     │
   │  fitering  │                                     │  fitering  │
   │  process   │                                     │  process   │
   └────────────┘                                     └────────────┘
   Loop on CTUs                                       Loop on CTUs
```

## FIG. 15

Current frame                                    Reference frame

Loop filter control information

# FIG. 16

Current frame                                    Reference frame

Loop filter control information

# FIG. 17

1800

Non-intra
slice/picture

1810

Off ◄── Flag
reuse_loop_filter_control_info
? ──► On

Reference frames

Loop on CTUs

Decode
loop filter control
information — 1820

Loop filtering
process — 1830

Loop on CTUs

Decode
reference frame
index — 1840

selection — 1850

Derive
loop filter control
information — 1860

Loop fitering
process — 1870

**FIG. 18**

A ◄──► NET ◄──► B

**FIG. 19**

| H | PAYLOAD |

**FIG. 20**

Europäisches
Patentamt

European
Patent Office

Office européen
des brevets

# EUROPEAN SEARCH REPORT

**Application Number**

EP 24 30 6723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/370645 A1 (RACAPE FABIEN [US] ET AL) 16 November 2023 (2023-11-16)<br><br>* paragraphs [0002] - [0005], [0008] - [0018], [0055] - [0195]; claims 9, 20 * | 1,2,4, 6-11, 13-15 | INV.<br>H04N19/117<br>H04N19/70<br>H04N19/174<br>H04N19/176<br>H04N19/82 |
| X | US 2018/041778 A1 (ZHANG LI [US] ET AL) 8 February 2018 (2018-02-08)<br>* paragraphs [0052] - [0070], [0104], [0108], [0131], [0195] * | 1-8, 10-13,15 | |
| X | US 2022/103817 A1 (ZHANG LI [US] ET AL) 31 March 2022 (2022-03-31)<br>* paragraph [0195] * | 1 | |
| A | US 2024/179308 A1 (YIN WENBIN [CN] ET AL) 30 May 2024 (2024-05-30)<br>* paragraphs [0008] - [0018] * | 1-15 | |

**TECHNICAL FIELDS SEARCHED (IPC)**

H04N

The present search report has been drawn up for all claims

| Place of search | Date of completion of the search | Examiner |
|---|---|---|
| Munich | 6 March 2025 | Cakiroglu Garton, S |

EPO FORM 1503 03.82 (P04C01)

## ANNEX TO THE EUROPEAN SEARCH REPORT
## ON EUROPEAN PATENT APPLICATION NO.

EP 24 30 6723

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2025

| Patent document cited in search report | Publication date | Patent family member(s) | Publication date |
|---|---|---|---|
| US 2023370645 A1 | 16-11-2023 | AU 2019301656 A1 | 11-03-2021 |
| | | AU 2024200480 A1 | 15-02-2024 |
| | | CN 112385237 A | 19-02-2021 |
| | | EP 3821609 A1 | 19-05-2021 |
| | | JP 2021532622 A | 25-11-2021 |
| | | KR 20210028645 A | 12-03-2021 |
| | | US 2021297706 A1 | 23-09-2021 |
| | | US 2023370645 A1 | 16-11-2023 |
| | | WO 2020014316 A1 | 16-01-2020 |
| US 2018041778 A1 | 08-02-2018 | BR 112019001571 A2 | 07-05-2019 |
| | | CA 3028469 A1 | 08-02-2018 |
| | | CN 109479130 A | 15-03-2019 |
| | | CN 109565594 A | 02-04-2019 |
| | | EP 3494697 A2 | 12-06-2019 |
| | | EP 3494698 A1 | 12-06-2019 |
| | | JP 2019525605 A | 05-09-2019 |
| | | KR 20190032396 A | 27-03-2019 |
| | | TW 201808006 A | 01-03-2018 |
| | | TW 201808011 A | 01-03-2018 |
| | | US 2018041778 A1 | 08-02-2018 |
| | | US 2018041779 A1 | 08-02-2018 |
| | | WO 2018026887 A1 | 08-02-2018 |
| | | WO 2018026888 A2 | 08-02-2018 |
| US 2022103817 A1 | 31-03-2022 | BR 112021024638 A2 | 18-01-2022 |
| | | CN 114424539 A | 29-04-2022 |
| | | CN 118138754 A | 04-06-2024 |
| | | EP 3970366 A1 | 23-03-2022 |
| | | JP 7433346 B2 | 19-02-2024 |
| | | JP 2022536519 A | 17-08-2022 |
| | | KR 20220020268 A | 18-02-2022 |
| | | US 2022103817 A1 | 31-03-2022 |
| | | US 2024107014 A1 | 28-03-2024 |
| | | WO 2020249123 A1 | 17-12-2020 |
| US 2024179308 A1 | 30-05-2024 | CN 117882370 A | 12-04-2024 |
| | | US 2024179308 A1 | 30-05-2024 |
| | | WO 2023020309 A1 | 23-02-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. KARCZEWICZ et al.** VVC In-Loop filters. *IEEE Transactions on Circuits and Systems for Video Technology*, October 2021, vol. 31 (10)
- **C. -M. FU et al.** Sample Adaptive Offset in the HEVC Standard. *IEEE Transactions on Circuits and Systems for Video Technology*, December 2012, vol. 22 (12)
- **C.-W. KUO et al.** AHG12: Cross-component Sample Adaptive Offset, JVET-V0153. *Algorithm description of Enhanced Compression Model 4 (ECM 4, JVET-Y2025*
- **C.-W. KUO et al.** AHG 12: CCSAO with extended edge classifiers and history offsets. *JVET AD0218*
- **MARTA KARCZEWICZ et al.** VVC In-Loop filters. *IEEE Transactions on Circuits and Systems for Video Technology*, October 2021, vol. 31 (10)
- **M. COBAN** ; **R-L. LIAO** ; **K. NASER** ; **J. STRÖM** ; **L. ZHANG**. Algorithm description of Enhanced Compression Model 13 (ECM13). *JVET-AH2025*, 17 April 2024
- **M. KARCZEWICZ et al.** Non-EE2: Reuse of ALF control information. *JVET-AI0280*